# EUROPÄISCHE PATENTSCHRIFT

(11) **EP 1 727 689 B1**
(45) Veröffentlichungstag und Bekanntmachung des Hinweises auf die Patenterteilung: **07.05.2008**
(21) Anmeldenummer: 05716091.3
(22) Anmeldetag: 16.03.2005
(51) Int. Cl.: B60G 3/20, B62D 7/18

(54) **RADAUFHÄNGUNG FÜR EIN LENKBARES FAHRZEUGRAD**
WHEEL SUSPENSION FOR A STEERABLE VEHICLE WHEEL
SUSPENSION POUR UNE ROUE ORIENTABLE DE VEHICULE

(30) Priorität: 25.03.2004 DE 102004014555
(43) Veröffentlichungstag der Anmeldung: 06.12.2006
(73) Patentinhaber: ZF FRIEDRICHSHAFEN AG, 88038 Friedrichshafen (DE)
(72) Erfinder: GELL, Klaus, 94130 Obernzell (DE)
(86) Internationale Anmeldenummer: PCT/EP2005/002763
(87) Internationale Veröffentlichungsnummer: WO 2005/092644

(56) Entgegenhaltungen:
- BE-A- 530 513
- DE-A1- 2 137 757
- DE-A1- 2 535 670
- FR-A- 1 090 997
- US-A- 4 930 804
- US-A- 5 364 114
- US-A- 5 542 492
- PATENT ABSTRACTS OF JAPAN Bd. 1995, Nr. 01, 28. Februar 1995 (1995-02-28) & JP 06 283249 A (NGK SPARK PLUG CO LTD), 7. Oktober 1994 (1994-10-07)
- PATENT ABSTRACTS OF JAPAN Bd. 008, Nr. 227 (M-332), 18. Oktober 1984 (1984-10-18) & JP 59 109407 A (MAZDA KK), 25. Juni 1984 (1984-06-25)

## Beschreibung

Die Erfindung betrifft eine Radaufhängug für ein lenkbares Fahrzeugrad nach der im Oberbegriff von Anspruch 1 näher definierten Art.

Herkömmliche Nutzfahrzeug-Einzelradaufhängungen sind beispielsweise aus der DE 37 40 954 A1 bekannt. Bei dieser Art von Einzelradaufhängung sind obere Querlenker und untere Querlenker einerseits mit dem Fahrzeugrahmen und andererseits mit einem Achsschenkelträger verbunden, wobei der Achsschenkelträger einerseits über eine Luftfeder ebenfalls mit dem Fahrzeugrahmen und andererseits über einen Achsschenkelbolzen mit einem Achsschenkel verbunden ist, welcher um die Drehachse des Achsschenkelbolzens drehbar angeordnet ist.

Diese Art von Einzelradaufhängungen begrenzen die Lenkwinkel, da der Fahrzeugreifen durch die Verbindung der oberen und unteren Querlenker mit dem Achsschenkelträger begrenzt ist. Da der Achsschenkelträger sehr große Kräfte aufnehmen muß, ist dieser massiv auszuführen, was eine aufwendige und kostspielige Herstellung mit sich bringt.

Die DE 198 50 136 A1 offenbart eine Einzelradaufhängung für Nutzfahrzeuge, bei welcher der obere Querlenker über ein Molekulargelenk an einem oberen Halter und der untere Querlenker direkt über ein Kugelgelenk am Achsschenkel verbunden sind, wobei der Achsschenkel über die Lagerung am Halter und das Kugelgelenk drehbar gelagert ist, um eine Lenkbewegung für das Fahrzeugrad ausführen zu können. Eine Feder-Dämpfer-Anordnung ist einerseits mit einem oberen Halter und andererseits mit der Fahrzeugkarosserie verbunden. Der obere Halter ist im Bereich der Verbindung zwischen dem oberen Querlenker und dem Achsschenkel angeordnet.

Diese Anordnung benötigt erheblichen Bauraum, insbesondere für die Kugelgelenke bzw. Lagerungen, da die Radkräfte über diese Kugelgelenke weitergegeben werden, was aufgrund dieser bauraumbedingt großen Lösung zu einer relativ großen Spreizung führt, was wiederum zu hohen Lenkkräften und somit zu Problemen bei der Einhaltung der gesetzlich zugelassenen maximalen Lenkkräfte führt. Da die Lenk- und Federkräfte über die radführenden Lagerungen, insbesondere Kugelgelenke, gehen, verursachen diese eine hohe Reibung. Dies beeinträchtigt den Lenkungsrücklauf nach einer Kurvenfahrt, die Lenkradzentrierung sowie den Fahrzeug-Geradeauslauf.

Die DE 37 389 64 C1 offenbart eine Einzelradaufhängung mit mehreren Lenkern, welche einerseits jeweils einzeln an einem Achsschenkel und andererseits an einem Fahrzeugrahmen angeordnet sind um wobei sich einzelne Lenker überkreuzen.

Die JP 59223507 A offenbart eine Einzelradaufhängung für Fahrzeuge, mit mehreren Lenkern, welche einerseits jeweils einzeln an einem Achsschenkel und andererseits an einem Fahrzeugrahmen angeordnet sind um wobei sich einzelne Lenker überkreuzen.

Der vorliegenden Erfindung liegt die Aufgabe zugrunde, eine Radaufhängung für ein lenkbares Vorderrad zu schaffen, durch welche größere Lenkwinkel erreicht werden und kostengünstig hergestellt werden kann.

Die Aufgabe wird mit einer, auch die kennzeichnenden Merkmale des Hauptanspruchs aufweisenden, gattungsgemäßen Radaufhängung gelöst.

Erfindungsgemäß besteht die Einzelradaufhängung aus einem oberen und einem unteren Querlenker, welche einerseits mit einem Achsschenkel in Verbindung stehen und andererseits an einem Rahmen angelenkt sind und welche im allgemeinen den Aufbau eines Dreieckslenkers aufweisen, wobei die Querlenker auch aus einzelnen Lenkern angeordnet sein können, welche jedoch in einer oberen Querlenkerlagerung und einer unteren Querlenkerlagerung mit dem Achsschenkel in Verbindung stehen. Mindestens ein Lenker, der obere oder der untere Querlenker weist einen von der Querlenkerlagerung beginnenden Abschnitt auf, welcher sich dadurch auszeichnet, dass sich der Querlenker in diesem Abschnitt nicht erweitert. In einer vorteilhaften Ausgestaltung der Erfindung wird dieser Abschnitt dadurch erreicht, dass sich die Querlenker überkreuzen, oder ein Querlenker den anderen durchdringt.

Somit sind der untere und obere Querlenker zweiteilig ausgeführt, wobei sich die beiden Teile der Querlenker überkreuzen. Durch dieses Überkreuzen kann der mögliche Lenkwinkel zusätzlich vergrößert werden.

Es besteht jedoch auch die Möglichkeit, die oberen und unteren Querlenker einteilig auszuführen, wobei diese Querlenker nach der Verbindungsstelle mit dem Achsschenkelbolzen einen Bereich aufweisen, an welchem sich die Querlenkerarme noch nicht trennen, wodurch zusätzlich ein größerer Lenkwinkel möglich ist.

Die Querlenker können mit einem Achsschenkelträger verbunden sein, welcher über einen Achsschenkelbolzen mit dem Achsschenkel verbunden ist, es besteht jedoch auch die Möglichkeit, dass der Querlenker direkt mit dem Achsschenkelbolzen angelenkt ist, welcher den Lenker direkt mit dem Achsschenkel verbindet. Vorzugsweise ist die Querelenkerlagerung innerhalb der Felge angeordnet, wodurch sich die Länge der Lenker erhöht, welches zu einer besseren Kinematik führt.

Indem die Lenker einerseits in einer einzigen Querlenkerlagerung im Bereich des Achsschenkels angelenkt sind und andererseits mit nahezu gleich langen Armen an dem Fahrzugrahmen angelenkt sich ergibt sich die Bauform eines Dreieckslenkers. Dadurch ist es möglich Einzelradaufhängungen mit einem Achsschenkelbolzen zu verwenden. Dabei kann der Achsschenkelbolzen den Achsschenkelträger direkt mit dem Achsschenkel verbinden und die Lenker mit dem Achsschenkelträger verbunden sein oder die Lenker sind direkt mit dem Achsschenkelbolzen verbunden und stehen somit über diesen mit dem Achsschenkel in Verbindung.

Ist der Achsschenkel drehbar um eine Drehachse angeordnet, besteht die Möglichkeit, dass koaxial zur Drehachse ein Träger angeordnet ist, auf welchem sich der Achsschenkel abstützt und welcher über einen Dämpfer mit dem Fahrzeugrahmen verbunden ist. Ebenfalls koaxial zur Drehachse sind Verbindungsmittel angeordnet, welche mit mindestens einem oberen Querlenker und einem unteren Querlenker verbunden sind. Diese Verbindungsmittel können beispielsweise als Achsschenkelbolzen ausgeführt sein, wobei in einer möglichen Ausgestaltungsform die Enden dieses Achsschenkelbolzens mit Lagerungen versehen sein können, über welche die oberen und unteren Querlenker verbunden sind. Diese Lagerungen können als Rollenlager, Gleitlager oder als Kugelgelenk oder als Molekulargelenk ausgeführt sein. Der Achsschenkel weist Aufnahmen auf, in welche der Achsschenkelbolzen eingeführt ist. Die Lagerungen, welche die oberen und unteren Querlenker mit den Verbindungsmitteln verbinden, sind vorzugsweise innerhalb der Radfelge angeordnet. Dadurch ist es möglich, einen besonders großen Lenkeinschlag zu realisieren.

In einer weiteren Ausgestaltungsform ist der Achsschenkelbolzen als zweiteiliger Achsschenkelbolzen ausgeführt, wobei die beiden Teile des Achsschenkelbolzens jeweils mit den Querlenkern verbunden und in die Aufnahmen des Achsschenkels eingeführt sind, und sich im Träger, welcher den Dämpfer aufnimmt, treffen.

In einer weiteren Ausgestaltungsform der Erfindung ist der Dämpfer zusätzlich als Federelement ausgeführt, vorzugsweise als Luftfederelement, wodurch ein kompaktes Feder-Dämpfer-Modul entsteht.

In einer weiteren Ausgestaltungsform ist die Verbindung des oberen Querlenkers mit dem Achsschenkelbolzen so ausgeführt, dass auf dieser Verbindung eine Luftfeder angeordnet sein kann, wobei der Dämpfer auf dem Träger verbleibt.

In einer weiteren Ausgestaltungsform ist der Träger, welcher den Dämpfer oder das Luftfeder-Dämpfer-Modul aufnimmt, zweiteilig ausgeführt, wodurch der Achsschenkelbolzen zuerst ein erstes Teil dieses Trägers durchdringt, anschließend den Achsschenkel durchdringt, um danach wiederum den Träger zu durchdringen, um schließlich den Achsschenkel erneut zu durchdringen und an seinem unteren freien Ende mit dem unteren Querlenker verbunden zu sein. Hierbei besteht ebenfalls die Möglichkeit, den Achsschenkelbolzen zweiteilig auszuführen.

Indem die oberen und unteren Querlenker mit dem Achsschenkelbolzen direkt verbunden sind, ragen diese tief in die Felge bis zur Lenkdrehachse, wodurch sich einerseits die Länge der Querlenkers erhöht, was eine bessere Federkinematik ermöglicht und andererseits die Lenkwinkel erhöht werden. Es besteht auch die Möglichkeit, die Querlenkerlänge nicht zu verlängern, wodurch insbesondere bei der Verwendung dieser Radaufhängung bei einem Omnibus die Gangbreite verbreitert werden kann. Indem die Abstützung der Radkräfte über die Dämpferfedereinheit über einen direkten Träger erfolgt, welcher unabhängig von der Verbindung der Querlenker ist, besteht die Möglichkeit, diesen Träger einfach auszuführen, wobei der Vorteil, dass die Radkräfte direkt in den Federdämpfer eingeleitet werden können, erhalten bleibt.

Weitere Merkmale sind der Figuren-Beschreibung zu entnehmen.

Es zeigen:
- Fig. 1: eine räumliche Darstellung der Achsaufhängung mit einem Luftfeder-Dämpfer-Modul, welches mit dem Träger verbunden ist;
- Fig. 2: eine Rückansicht der Radaufhängung, wobei ein Dämpfer mit dem Träger verbunden ist und die Luftfeder sich auf dem Verbindungsteil des Achsschenkelbolzens mit dem oberen Querlenker befindet;
- Fig. 3: eine schematische Darstellung eines zweiteiligen Achsschenkelbolzens, welcher sich innerhalb ein es Trägers befindet;
- Fig. 4: eine räumliche Darstellung der Radaufhängung mit einem einteiligen Träger;
- Fig. 5: eine räumliche Darstellung der Radaufhängung mit einem einteiligen Träger mit zwei Lagerstellen;
- Fig. 6: eine räumliche Darstellung einer Radaufhängung mit einer Luftfeder und einem Dämpfer;
- Fig. 7: eine räumliche Darstellung eines einteiligen oberen Querlenkers mit einer Verbindung mit dem Achsschenkelbolzen;
- Fig. 8: eine räumliche Darstellung des Achsschenkelbolzens mit den jeweils zweiteiligen oberen und unteren Querlenkern und
- Fig. 9: eine räumliche Darstellung eines Achsschenkelbolzens mit einteiligen oberen und unteren Querlenkern.

### Fig. 1:

Ein Achsschenkel 1 weist eine obere Aufnahme 2 und eine untere Aufnahme 3 auf, in welcher sich ein Achsschenkelbolzen 4 befindet, welcher koaxial zu einer Drehachse 5 angeordnet ist, um welche sich somit der Achsschenkel 1 drehen kann, um Lenkbewegungen für das Fahrzeugrad 6 auszuführen. Der Achsschenkelbolzen 4 weist an seinem oberen Ende eine Lagerung 7 auf, welche beispielsweise als Rollenlagerung oder als Kugelgelenk oder als Molekulargelenk ausgeführt sein kann, und über welche ein erster Arm 8 und ein zweiter Arm 9 eines oberen Querlenkers 10 verbunden sind. Ebenso weist der Achsschenkelbolzen 4 an seinem unteren Ende eine Lagerung 11 auf, welche wie die Lagerung 7 ausgeführt sein kann und über welche ein erster Arm 12 und ein zweiter Arm 13 eines unteren Querlenkers 14 verbunden sind. Indem die oberen Querlenker 10 und die unteren Querlenker 14 direkt mit dem Achsschenkelbolzen 4 verbunden sind, verlängern sich die Querlenker, was zu einer besseren Feder-Kinematik führt. Vorzugsweise sind die Lagerungen 7 und 11 innerhalb der Felge 15 angeordnet. Zwischen der oberen Aufnahme 2 und der unteren Aufnahme 3 ist ein Träger 16 angeordnet, welcher mit einem Feder-Dämpfer-Modul 17 verbunden ist. Somit stützt sich der Achsschenkel 1 über den Träger 16 und das Feder-Dämpfer-Modul 17 an einem nicht dargestellten Fahrzeugrahmen ab. Der erste Arm 8 und der zweite Arm 9 sowie der erste Arm 12 und der zweite Arm 17 sind ebenfalls an einem nicht dargestellten Fahrzeugrahmen angelenkt. Es besteht auch die Möglichkeit, die Lagerung 7 und 11 nicht direkt auf der Drehachse 5 anzuordnen, sondern den Achsschenkelbolzen 4 an seinen Enden leicht gekröpft auszuführen. Der erste Arm 12 und der zweite Arm 13 sind überkreuzt angeordnet, wodurch der Lenkwinkel zusätzlich erhöht werden kann.

### Fig. 2:

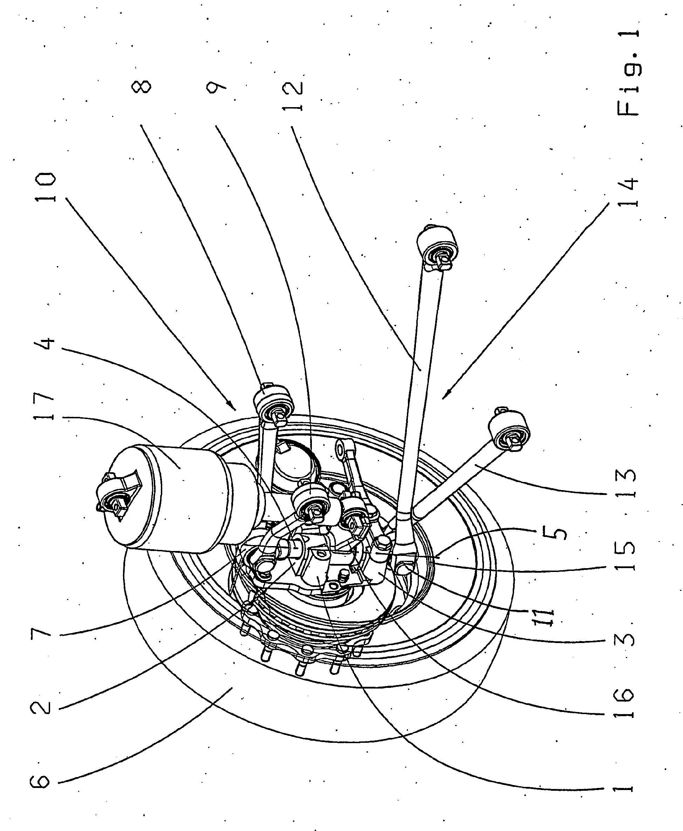

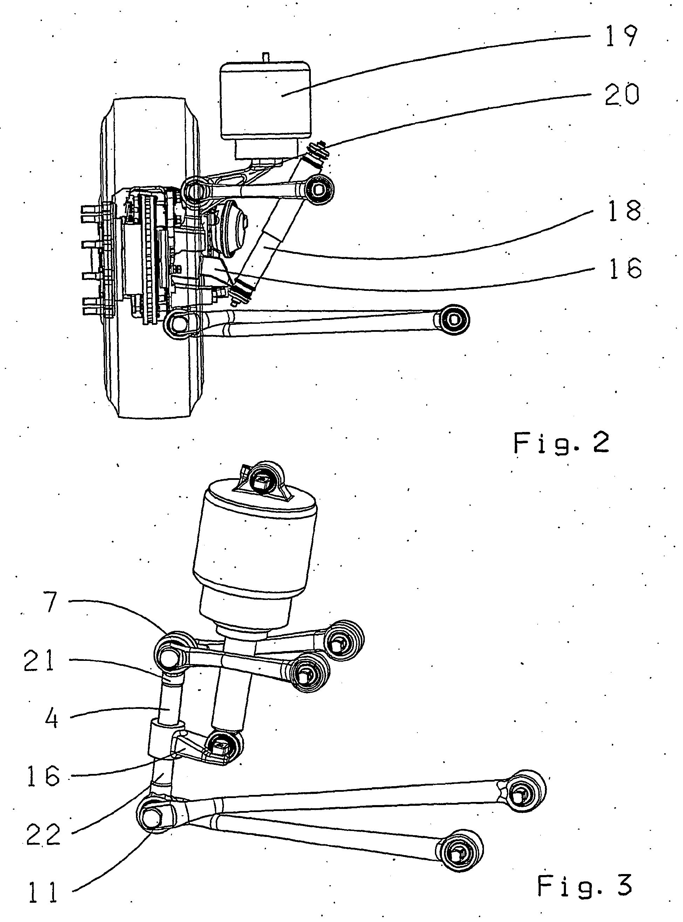

Der prinzipielle Aufbau der Radaufhängung nach Fig. 2 entspricht der Radaufhängung nach Fig. 1, wobei jedoch kein Feder-Dämpfer-Modul verwendet wird, sondern der Träger 16 direkt mit einem Dämpfer 18 verbunden ist, und der Achsschenkelbolzen 4 an seinem oberen Ende so ausgestaltet ist, dass er eine Luftfeder 10 aufnehmen kann. Der Achsschenkelbolzen 4 weist deshalb einen Arm 20 auf, welcher in einer Stütze für die Luftfeder 19 endet.

### Fig. 3:

Die Radaufhängung entspricht der Radaufhängung nach Fig. 1, wobei bei dieser Darstellung der Achsschenkel 1 mit seinen Anschlußteilen sowie der Felge 15 und dem Rad 6 entfernt wurde. Der Achsschenkelbolzen 4 besteht aus einem ersten Teil 21 und einem zweiten Teil 22, wobei sich diese beiden Teile im Träger 16 treffen. Es besteht auch die Möglichkeit, die Lagerung 7 und die Lagerung 11 mit dem Achsschenkelbolzen 4 zu verschrauben, wodurch dieser einteilig ausgeführt sein kann.

### Fig. 4:

Diese Radaufhängung entspricht der Radaufhängung nach Fig. 1, wobei das Luftfeder-Dämpfer-Modul getrennt als Luftfeder 19 und Dämpfer 18 ausgeführt sind, und der Träger 16 einen ersten Arm 23 und einen zweiten Arm 24 aufweist, wobei der erste Arm 23 mit der Luftfeder 19 und der zweite Arm 24 mit dem Dämpfer 18 verbunden sind.

### Fig. 5:

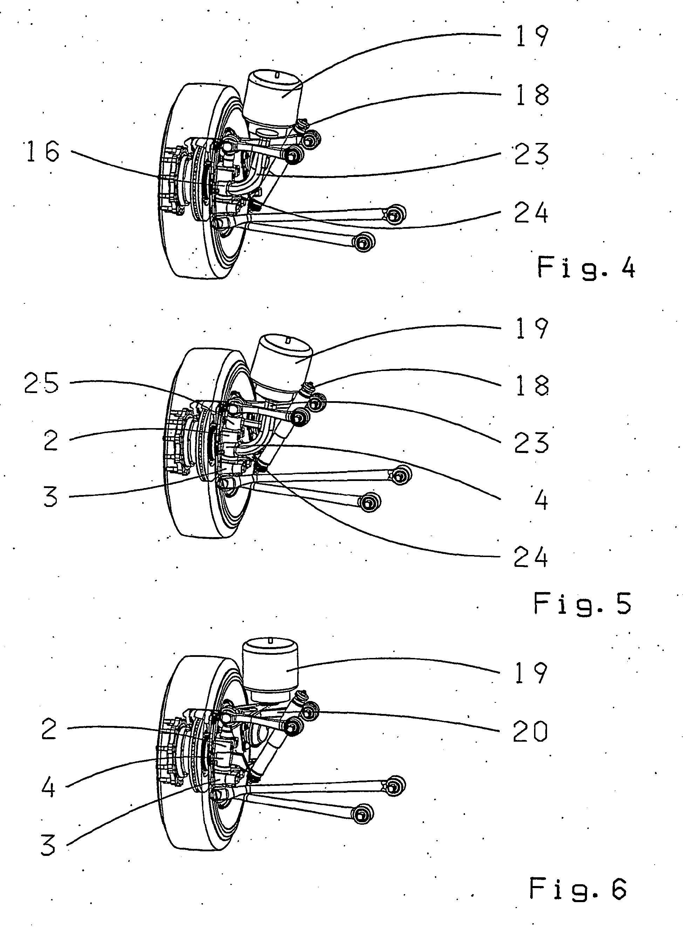

Diese Radaufhängung entspricht der Radaufhängung nach Fig. 4, wobei der Träger 16 einen weiteren Arm 25 aufweist, wodurch der Achsschenkelbolzen 4 zuerst diesen weiteren Arm 25, dann die obere Aufnahme 2 und anschließend wieder den Träger 4 und anschließend die untere Aufnahme 3 durchdringt.

### Fig. 6:

Diese Radaufhängung entspricht der Radaufhängung nach Fig. 2, wobei durch die räumliche Darstellung die Durchdringung des Achsschenkelbolzens 4 durch die obere Aufnahme 2, den Träger 4 und die untere Aufnahme 3 sowie den Arm 20 zur Verbindung der Luftfeder 19 dargestellt ist.

### Fig. 7:

Der obere Querlenker 10 weist einen ersten Arm 8 und einen zweiten Arm 9 auf und ist über ein Kugelgelenk 25 mit dem Achsschenkelbolzen 4 verbunden. In der gezeigten Darstellung ist der Querlenker 10 einteilig ausgeführt, er kann jedoch auch zweiteilig ausgeführt sein.

### Fig. 8:

Der obere Querlenker 10 ist über die Lagerung 7 mit dem Achsschenkelbolzen 4 verbunden, wobei sich der erste Arm 8 und der zweite Arm 9 überkreuzen. Der untere Querlenker 14 ist über die Lagerung 11 mit dem Achsschenkelbolzen 4 verbunden, wobei der erste Arm 12 den zweiten Arm 13 durchdringt.

### Fig. 9:

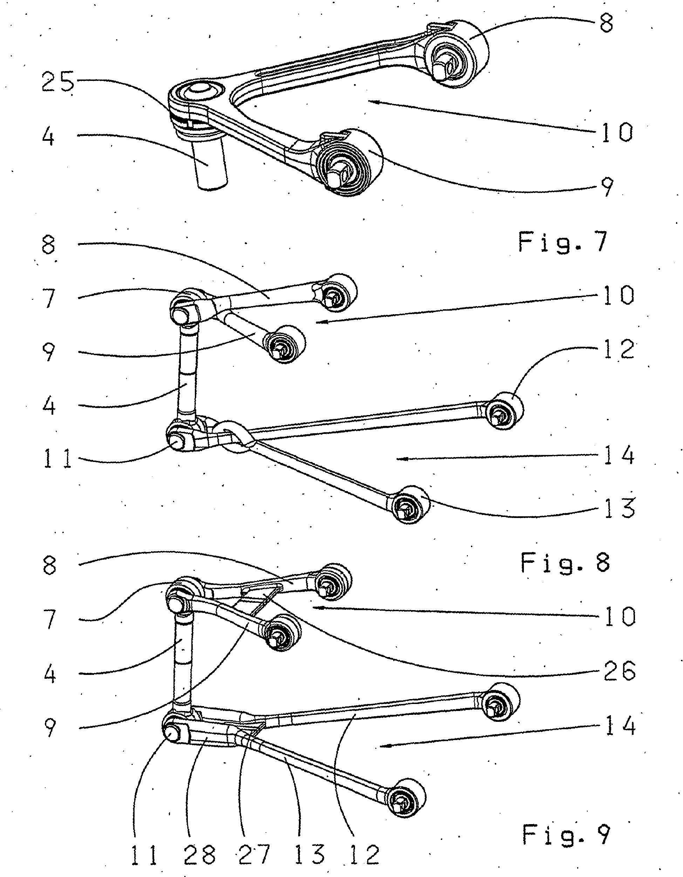

Der obere Querlenker 10 weist einen ersten Arm 8 und einen zweiten Arm 9 auf, welche über einen Steg 26 miteinander und über die Lagerung 7 mit dem Achsschenkelbolzen 4 verbunden sind. Der untere Querlenker 14 weist einen ersten Arm 12 und einen zweiten Arm 13 auf, welche über einen Steg 27 miteinander und über die Lagerung 11 mit dem Achsschenkelbolzen 4 verbunden sind. Die weiteren Bauteile der Radaufhängung sind aus Gründen der Klarheit in den Fig. 7, 8 und 9 nicht dargestellt. Der untere Querlenker 14 weist einen Abschnitt 28 auf, an welchem die beiden Arme 13 und 12 noch nahezu parallel ausgeführt sind und erst anschließend den Querlenker verbreitern, wobei der Abschnitt 28 so ausgeführt ist, dass der Querlenker bei einem vergrößerten Lenkwinkel nicht mit dem Fahrzeugrad kollidiert.

### Bezugszeichen

- 1: Achsschenkel
- 2: obere Aufnahme
- 3: untere Aufnahme
- 4: Achsschenkelbolzen
- 5: Drehachse
- 6: Fahrzeugrad
- 7: Lagerung
- 8: erster Arm
- 9: zweiter Arm
- 10: oberer Querlenker
- 11: Lagerung
- 12: erster Arm
- 13: zweiter Arm
- 14: unterer Querlenker
- 15: Felge
- 16: Träger
- 17: Feder-Dämpfer-Modul
- 18: Dämpfer
- 19: Luftfeder
- 20: Arm
- 21: erster Teil
- 22: zweiter Teil
- 23: erster Arm
- 24: zweiter Arm
- 25: Kugelgelenk
- 26: Steg
- 27: Steg
- 28: Abschnitt

## Patentansprüche

1. Radaufhängung für ein lenkbares Fahrzeugrad mit einem um eine Drehachse (5) drehbar angeordneten Achsschenkel (1), welcher über einen Achsschenkelbolzen mit einem oberen Querlenker (10) mit zwei Armen (8,9) und einem unteren Querlenker (14) mit zwei Armen (12,13) in Verbindung steht, mit einem oberen Querlenkerlager (7) und einem unteren Querlenkerlager (11), über welche die Querlenker mit dem Achsschenkel in Verbindung stehen, **dadurch gekennzeichnet, dass** die zwei Arme (12,13) des unteren Querlenkers (14) am unteren Querlenkerlager (11), welches innerhalb einer Felge des Fahrzeugrades angeordnet ist, angelenkt sind und der untere Querlenker (14) einen am Querlenkerlager(11) beginnenden Abschnitt (28) aufweist, bei welchem der untere Querlenker (14) in seiner Breite nahezu gleich bleibt oder sich verschmälert und der untere Querlenker (14) sich erst anschließend an diesen Abschnitt verbreitert, wobei innerhalb dieses Abschnitts die Arme (12, 13) dieses Querlenkers (7,11) sich entweder überkreuzen oder ein Arm (12) den anderen Arm (13)durchdringt oder die Arme (12,13) in diesem Abschnitt (28) über einen Steg (27) verbunden sind.

2. Radaufhängung nach Anspruch 1, **dadurch gekennzeichnet, dass** ein Träger (16), auf welchem sich der Achsschenkel (1) abstützt, und welcher über einen Dämpfer (18) mit dem Fahrzeugrahmen verbunden ist, mit einem koaxial zur Drehachse (5) angeordneten Achsschenkelbolzen (4), mit mindestens einem oberen Querlenker (10) und mindestens einem unteren Querlenker (14), welche mit dem Fahrzeugrahmen und über mindestens ein Verbindungsmittel (4, 7, 11) mit dem Achsschenkel (1) in Verbindung stehen, wobei der Träger (16) über eine koaxial zur Drehachse (5) angeordnete Lagerung (7, 11) mit dem Achsschenkel (1) verbunden ist, und die Verbindungsmittel (4, 7, 11) koaxial zur Drehachse (5) angeordnet sind, und die Querlenker (10, 14) mit den Verbindungsmitteln (4, 7, 11) verbunden sind.

3. Radaufhängung nach Anspruch 1, **dadurch gekennzeichnet, dass** die Verbindungsmittel (4, 7, 11) mindestens einen Achsschenkelbolzen (4) aufweisen, welcher mit mindestens einem Querlenker (10, 14) verbunden ist.

4. Radaufhängung nach Anspruch 2, **dadurch gekennzeichnet, dass** die Querlenker (10, 14) jeweils mit den Enden des Achsschenkelbolzens (4) verbunden sind, und der Achsschenkelbolzen (4) den Träger (16) durchdringt.

5. Radaufhängung nach Anspruch 1, **dadurch gekennzeichnet, dass** der Achsschenkelbolzen (4) an seinen Enden eine Querlenkerlagerung (7, 11) aufweist, über welche die Querlenker (10, 14) mit dem Achsschenkelbolzen verbunden sind.

6. Radaufhängung nach Anspruch 1, **dadurch gekennzeichnet, dass** die Querlenkerlagerung (7, 11) als Rollenlagerung, Gleitlagerung oder Kugelgelenk oder als Molekulargelenk ausgeführt ist.

7. Radaufhängung nach Anspruch 2, **dadurch gekennzeichnet, dass** auf dem Träger (16) eine Feder (19) und ein Dämpfer (18) angeordnet sind.

8. Radaufhängung nach Anspruch 1, **dadurch gekennzeichnet, dass** auf dem Träger (16) ein Feder-Dämpfer-Modul (17) angeordnet ist.

9. Radaufhängung nach Anspruch 1, **dadurch gekennzeichnet, dass** am oberen Ende des Achsschenkelbolzens (4) eine Verbindung mit dem oberen Querlenker (10) und eine Verbindung mit einer Feder (17) angeordnet sind.

10. Radaufhängung nach Anspruch 1, **dadurch gekennzeichnet, dass** der obere Querlenker (10) und der untere Querlenker (14) über jeweils zwei Verbindungsstellen mit dem Fahrzeugrahmen verbunden sind.

11. Radaufhängung nach Anspruch 1, **dadurch gekennzeichnet, dass** die Querlenker (10, 14) als gegossenes oder geschmiedetes oder aus Blechteilen geformtes oder geschweißtes Bauteil ausgeführt sind.

12. Radaufhängung nach Anspruch 1, **dadurch gekennzeichnet, dass** die Radaufhängung in einem Nutzkraftwagen verwendet wird.

## Claims

1. Wheel suspension for a steerable vehicle wheel with a steering knuckle (1) arranged to rotate around an axis of rotation (5) and connected via a steering-knuckle pin with an upper transverse link (10) with two arms (8,9) and a lower transverse link (14) with two arms (12,13), with an upper transverse-link mount (7) and a lower transverse-link mount (11), via which the transverse links are connected to the steering knuckle, **characterized in that** the two arms (12,13) of the tower transverse link (14) are pivoted on the lower transverse-link mount (11), which is arranged within the rim of the wheel, and that the lower transverse link (14) features a section (28) starting at the transverse-link mount (11) where the width of the lower transverse link (14) remains virtually unchanged or narrows and where the lower transverse link (14) only starts to widen after this section, with the arms (12,13) of this transverse link (7,11) within this section either crossing over each other, or one arm (12) penetrating the other arm (13), or with the arms (12,13) within this section (28) being linked via a web (27).

2. Wheel suspension acc. to claim 1, **characterized in that** a girder (16), on which the steering knuckle (1) is supported and which is linked to the vehicle frame via a damper (18), is linked to a steering-knuckle pin (4) arranged coaxially relative to the axis of rotation (5), to at least one upper transverse link (10) and at least one lower transverse link (14), which are connected to the vehicle frame and via at least one connecting element (4, 7, 11) to the steering knuckle (1), with the girder (16) being connected to the steering knuckle (1) via a suspension (7, 11) arranged coaxially relative to the axis of rotation (5) and the connecting elements (4, 7, 11) being arranged coaxially relative to the axis of rotation (5), and the transverse links (10,14) being linked to the connecting elements (4, 7, 11).

3. Wheel suspension acc. to claim 1, **characterized in that** the connecting elements (4, 7, 11) feature at least one steering knuckle pin (4) which is connected to at least one transverse link (10,14).

4. Wheel suspension acc. to claim 2, **characterized in that** each transverse link (10,14) is connected to the ends of the steering-knuckle pin (4) and that the steering-knuckle pin (4) penetrates the girder (16).

5. Wheel suspension acc. to claim 1, **characterized in that** the steering-knuckle pin's (4) ends feature a transverse-link mount (7, 11) through which the transverse links (10, 14) are connected to the steering-knuckle pin.

6. Wheel suspension acc. to claim 1, **characterized in that** the transverse-link mount (7, 11) is designed as a roller bearing, plain bearing, ball joint, or as a molecular joint.

7. Wheel suspension acc. to claim 2, **characterized in that** a spring (19) and a damper (18) are arranged on the girder (16).

8. Wheel suspension acc. to claim 1, **characterized in that** a spring-damper module (17) is arranged on the girder (16).

9. Wheel suspension acc. to claim 1, **characterized in that** a connection to the upper transverse link (10) and a connection to a spring (17) are arranged on the upper end of the steering-knuckle pin (4).

10. Wheel suspension acc. to claim 1, **characterized in that** the upper transverse link (10) and the lower transverse link (14) are connected to the vehicle frame via two connection points each.

11. Wheel suspension acc. to claim 1, **characterized in that** the transverse links (10, 14) are designed as cast or forged components, or are formed or welded from sheet-metal panels.

12. Wheel suspension acc. to claim 1, **characterized in that** the wheel suspension is used in a commercial vehicle.

## Revendications

1. Suspension de roue pour une roue directrice de véhicule, comprenant un pivot (1) disposé rotatif autour d'un axe de rotation (5), lequel est en liaison, par l'intermédiaire d'un axe de pivot, avec un bras transversal supérieur (10) comportant deux branches (8, 9) et avec un bras transversal inférieur (14) comportant deux branches (12, 13), un palier supérieur (7) de bras transversal et un palier inférieur (11) de bras transversal, par l'intermédiaire desquels les bras transversaux sont en liaison avec le pivot, **caractérisée en ce que** les deux branches (12, 13) du bras transversal inférieur sont articulées au palier inférieur (11) de bras transversal qui est disposé à l'intérieur d'une jante de la roue de véhicule automobile, et le bras transversal inférieur (14) comporte un segment (28) prenant naissance sur le palier (11) de bras transversal inférieur, dans lequel le bras transversal inférieur (14) reste presque constant en largeur ou s'amincit, et le bras transversal inférieur (14) s'élargit seulement à la suite de ce segment, tandis que, dans les limites de ce segment, soit les branches (12, 13) de ce bras transversal (7, 11) se croisent, soit une branche (12) traverse l'autre branche (13), soit encore les branches (12, 13) sont réunies par une entretoise (27) dans ce segment (28).

2. Suspension de roue selon la revendication 1, **caractérisée en ce qu'**un support (16), sur lequel le pivot (1) prend appui et qui est relié au châssis du véhicule par l'intermédiaire d'un amortisseur (18), est relié à un axe de pivot (4) disposé coaxialement à l'axe de rotation (5), à au moins un bras transversal supérieur (10), et à au moins un bras transversal inférieur (14) qui sont en liaison avec le châssis du véhicule et aussi au pivot (1) par l'intermédiaire d'au moins un moyen d'assemblage (4, 7, 11), le support (16) étant relié au pivot (1) par l'intermédiaire d'un ensemble palier (7, 11) disposé coaxiale ment à l'axe de rotation (5), les moyens de liaison (4, 7, 11) étant disposés coaxialement à l'axe de rotation (5) et les bras transversaux (10, 14) étant reliés aux moyens de liaison (4, 7, 11).

3. Suspension de roue selon la revendication 1, **caractérisée en ce que** les moyens de liaison (4, 7, 11) comportent au moins un axe de pivot (4) qui est relié à au moins un bras transversal (10, 14).

4. Suspension de roue selon la revendication 2, **caractérisée en ce que** les bras transversaux (10, 14) sont reliés respectivement aux extrémités de l'axe de pivot (4) et l'axe de pivot (4) traverse le support (16).

5. Suspension de roue selon la revendication 1, **caractérisée en ce que** l'axe de pivot (4) comporte à ses extrémités un ensemble palier de bras transversaux (7, 11) par l'intermédiaire duquel les bras transversaux (10, 14) sont reliés à l'axe de pivot.

6. Suspension de roue selon la revendication 1, **caractérisée en ce que** l'ensemble palier de bras transversaux (7, 11) est réalisé sous la forme d'un palier à rouleaux, d'un palier lisse ou d'un joint à rotule ou encore sous la forme d'un joint moléculaire.

7. Suspension de roue selon la revendication 2, **caractérisée en ce qu'**un ressort (19) et un amortisseur (18) sont montés sur le support (16).

8. Suspension de roue selon la revendication 1, **caractérisée en ce qu'**un module ressort-amortisseur (17) est disposé sur le support (16).

9. Suspension de roue selon la revendication 1, **caractérisée en ce que**, à l'extrémité supérieure de l'axe de pivot (4), sont disposées une liaison avec le bras transversal supérieur (10) et une liaison avec un ressort (17).

10. Suspension de roue selon la revendication 1, **caractérisée en ce que** le bras transversal supérieur (10) et le bras transversal inférieur (14) sont reliés au châssis du véhicule automobile chacun par l'intermédiaire de deux points de liaison.

11. Suspension de roue selon la revendication 1, **caractérisée en ce que** les bras transversaux (10, 14) sont réalisés sous la forme d'un élément coulé ou forgé ou façonné à partir de pièces de tôle ou soudé.

12. Suspension de roue selon la revendication 1, **caractérisée en ce que** la suspension de roue est utilisée dans un véhicule automobile utilitaire.
